(19) **Europäisches Patentamt European Patent Office Office européen des brevets**

(11) **EP 4 528 268 B1**

(12) **FASCICULE DE BREVET EUROPEEN**

(45) Date de publication et mention de la délivrance du brevet:
**11.03.2026 Bulletin 2026/11**

(51) Classification Internationale des Brevets (IPC):
**G01N 30/74** (2006.01)   **G02F 1/21** (2006.01)
**G01N 30/60** (2006.01)

(21) Numéro de dépôt: **24197847.7**

(52) Classification Coopérative des Brevets (CPC):
**G01N 30/74**; G01N 30/60

(22) Date de dépôt: **02.09.2024**

(54) **SYSTÈME ANALYTIQUE EN PHASE GAZEUSE À DISPOSITIF DE DÉTECTION OPTIQUE**

GAS-PHASEN-ANALYSESYSTEM MIT OPTISCHER DETEKTIONSVORRICHTUNG

GAS-PHASE ANALYTICAL SYSTEM WITH OPTICAL SENSING DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.09.2023 FR 2310040**

(43) Date de publication de la demande:
**26.03.2025 Bulletin 2025/13**

(73) Titulaire: **Commissariat à l'Energie Atomique et aux Energies Alternatives 75015 Paris (FR)**

(72) Inventeurs:
• **BOURLON, Bertrand**
**38054 GRENOBLE CEDEX 09 (FR)**
• **LAPLATINE, Loïc**
**38054 GRENOBLE CEDEX 09 (FR)**
• **HIRSCHAUER, Pomme**
**38054 GRENOBLE CEDEX 09 (FR)**

(74) Mandataire: **Atout PI Laplace Immeuble Up On 25 Boulevard Romain Rolland CS 40072 75685 Paris Cedex 14 (FR)**

(56) Documents cités:
**WO-A1-2022/258559     US-B2- 6 887 359**

• INGENHOFF J ET AL: "SPECTAL INTERFEROMETRIC SENSORS FOR GASES AND LIQUIDS USING INTEGRATED OPTICAL DEVICES", CHEMICAL, BIOCHEMICAL, AND ENVIRONMENTAL FIBER SENSORS IV, 8-9SEPTEMBER 1992, BOSTON, MA, US, BELLINGHAM, WA, US, vol. 1796, 8 September 1992 (1992-09-08), pages 51 - 61, XP000619336
• FABRICIUS N ET AL: "A gas sensor based on an integrated optical Mach-Zehnder interferometer", SENSORS AND ACTUATORS B: CHEMICAL, ELSEVIER BV, NL, vol. 7, no. 1-3, 1 March 1992 (1992-03-01), pages 672 - 676, XP026570802, ISSN: 0925-4005, [retrieved on 19920301], DOI: 10.1016/0925-4005(92)80384-A

## Description

### Domaine technique

La présente invention concerne de manière générale le domaine de l'analyse de mélange gazeux ou de capteur de gaz, et en particulier un système analytique en phase gazeuse à dispositif de détection optique.

Dans les systèmes analytiques de type chromatographie en phase gazeuse, permettant d'identifier et de quantifier des composés chimiques volatiles, il est connu d'utiliser des détecteurs de chromatographie classiques et/ou miniaturisés telles que par exemple des dispositifs de spectroscopie de masse, des détecteurs à ionisation de flamme (noté FID), des dispositifs nano-électromécaniques ou NEMS, ou encore des micro-détecteurs de conductivité thermique. Certains systèmes analytiques en phase gazeuse comprennent des dispositifs de détection optique intégrée. De telles solutions sont par exemple décrites dans les articles "A microfabricated optofluidic ring resonator for sensitive, high-speed detection of volatile organic compounds" de Kee Scholten et al., Lab Chip, 2014, 14, 3873, "A Portable Micro-Gas Chromatography with Integrated Photonic Crystal Slab Sensors on Chip" de Priyanka Biswas et al., Biosensors, 2021, 11, 326, ou encore "Fabry-Pérot Cavity Sensors for Multipoint On-Column Micro Gas Chromatography Detection" de Jing Liu et al., Analytical Chemistry, 2010, 82, 11, 4370-4375.

Cependant, les dispositifs de détection connus sont coûteux, sont restreints en termes de capacité de détection de composés chimiques spécifiques, ont une haute limite de détection, et/ou ont une faible versatilité de détection.

Certains dispositifs de détection optiques requièrent en outre un environnement de mesure évolué couplé à un détecteur coûteux. Par exemple, certains dispositifs de détection optiques utilisent une source laser spectralement fine et accordable afin de s'aligner spectralement sur la longueur d'onde de résonance de la cavité optique du dispositif de détection. Des systèmes analytiques en phase gazeuse comprenant un capteur interférométrique de Mach-Zehnder sont connus des documents suivants:

- "Spectral interferometric sensors for gases and liquids using integrated optical devices" (INGENHOFF J ET AL, CHEMICAL, BIOCHEMICAL, AND ENVIRONMENTAL FIBER SENSORS IV, 8-9SEPTEMBER 1992, vol. 1796)
- "A gas sensor based on an integrated optical Mach-Zehnder interferometer" (FABRICIUS N ET AL, SENSORS AND ACTUATORS B: CHEMICAL, ELSEVIER BV, NL, vol. 7, no. 1-3, 1 mars 1992, pages 672-676)

Il existe ainsi un besoin pour un système analytique en phase gazeuse amélioré.

### Résumé de l'invention

L'invention est définie dans les revendications. L'invention vient améliorer la situation en proposant un système analytique en phase gazeuse comprenant une unité d'injection configurée pour injecter un échantillon à analyser comprenant au moins un composé chimique, une unité d'introduction d'un flux de gaz vecteur, une colonne de transport, et un dispositif de détection, le au moins un composé chimique étant entraîné par le gaz vecteur dans la colonne de transport jusqu'au dispositif de détection. Le dispositif de détection est un détecteur optique comprenant au moins un capteur interférométrique de Mach-Zehnder alimenté par une source optique et intégré dans une structure micro-fluidique, le capteur comprenant un bras sensible exposé à au moins un composé chimique et un bras de référence imperméable à au moins un composé chimique, le au moins un capteur étant adapté pour détecter optiquement le passage du au moins un composé chimique au travers du bras sensible. La structure micro-fluidique comprend un canal micro-fluidique primaire et/ou au moins un canal micro-fluidique secondaire scellé au niveau de l'extrémité de canal, le au moins un composé chimique étant transporté par convection au travers du canal primaire et/ou par diffusion au travers du canal secondaire scellé, le au moins un capteur étant positionné sur le canal primaire et/ou le canal secondaire scellé, le dispositif de détection étant adapté pour déterminer le temps de rétention et/ou le coefficient de diffusion du au moins un composé chimique en sortie de la colonne à partir de la détection optique du passage du au moins un composé chimique au travers du capteur.

Avantageusement, le au moins un capteur interférométrique de Mach-Zehnder peut comprendre un revêtement sur le bras sensible, le revêtement étant adapté pour adsorber préférentiellement le au moins un composé chimique.

Dans des modes de réalisation, chaque canal micro-fluidique secondaire scellé peut avoir une longueur L distincte de canal définie dans le sens de déplacement du au moins un composé chimique.

Le au moins un canal micro-fluidique secondaire scellé peut comprendre au moins un obstacle physique disposé localement dans le canal, l'obstacle étant adapté pour minimiser tout phénomène convectif en entrée du canal et/ou pour ralentir le phénomène de diffusion du composé chimique à détecter.

Selon certains modes de réalisation, la structure micro-fluidique peut comprendre en outre au moins un canal micro-fluidique secondaire ouvert au niveau de l'extrémité de canal, le au moins un composé chimique étant transporté par convection au travers du canal micro-fluidique secondaire ouvert.

Le moins un canal micro-fluidique secondaire ouvert et/ou scellé peut comprendre un revêtement comprenant une substance physico-chimique sur la paroi du canal.

L'invention fournit également procédé d'analyse d'un échantillon comprenant au moins un composé chimique, le procédé comportant au moins les étapes suivantes :

- Injecter l'échantillon à analyser dans le système analytique en phase gazeuse ;
- Acquérir au moins un signal optique de mesure détecté par au moins un capteur interférométrique de Mach-Zehnder du système analytique en phase gazeuse ;
- Associer au au moins un signal optique de mesure, un composé chimique de l'échantillon à analyser.

Le procédé comprend en outre une étape consistant à déterminer une valeur de temps de rétention et/ou une valeur de temps de diffusion relative au composé chimique associé au au moins un signal optique de mesure.

Les modes de réalisation de l'invention fournissent ainsi un système analytique en phase gazeuse amélioré comprenant un détecteur miniaturisé permettant une sélectivité améliorée de composés chimiques à analyser, avec une basse limite de détection, à bas coût, rapide, et compatible avec tout gaz vecteur.

Le système analytique en phase gazeuse et le procédé associé, selon les modes de réalisation de l'invention, permettent d'une part de détecter le passage d'un composé ou de plusieurs composés chimiques gazeux préalablement séparés spatialement par une colonne de chromatographie, et d'autre part de fournir une information spécifique sur la nature du ou de ces composés chimiques gazeux.

Ils permettent également une mise en œuvre compatible avec tout type de gaz vecteur, une large gamme de détection relative à la nature des composés chimiques gazeux détectés (c'est-à-dire alcanes, alcools, acétone, esters, etc.), une détection non destructive des composés gazeux à analyser, ainsi qu'une limite basse de détection de composés chimiques gazeux typiquement pour des concentrations inférieures à quelques centaines de ppbs (ou *« part per billion »* en anglais, correspondant à un rapport de $10^{-9}$).

Ils permettent en outre de fournir une solution à compacité augmentée, compatible avec une acquisition de mesure à haute fréquence (c'est-à-dire notamment entre 240-1000 Hz), et de limiter les effets de dérive dans le temps des mesures associés par exemple à des fluctuations de température, de flux, de pression, ou encore de longueur d'onde laser.

Les modes de réalisation de l'invention fournissent avantageusement une solution abordable en termes de coût, la fabrication du système analytique en phase gazeuse étant en particulier compatible avec une fabrication collective en salle blanche et avec l'utilisation d'une électronique de détection bon marché.

**Description des figures**

D'autres caractéristiques, détails et avantages de l'invention ressortiront à la lecture de la description faite en référence aux dessins annexés donnés à titre d'exemple.

[Fig.1] La figure 1 est un schéma représentant un système analytique en phase gazeuse, selon des modes de réalisation de l'invention.

[Fig.2] La figure 2 est un schéma représentant un dispositif de détection optique, selon des modes de réalisation de l'invention.

[Fig.3] La figure 3 est un schéma représentant un dispositif de détection optique, selon des modes de réalisation de l'invention.

[Fig.4] La figure 4 est un schéma représentant un dispositif de détection optique, selon des modes de réalisation de l'invention.

[Fig.5] La figure 5 est un schéma représentant une vue schématique d'un capteur interférométrique de Mach-Zehnder, selon des modes de réalisation de l'invention.

[Fig.6] La figure 6 est un schéma représentant un plan de coupe d'un capteur interférométrique de Mach-Zehnder, selon des modes de réalisation de l'invention.

[Fig.7] La figure 7 est constituée de quatre graphiques (a), (b), (c) et (d) illustrant des résultats d'analyse de composés chimiques par le système analytique en phase gazeuse, selon des modes de réalisation de l'invention.

[Fig.8] La figure 8 est une photographie réalisée par microscopie électronique à balayage illustrant un capteur interférométrique de Mach-Zehnder, selon des modes de réalisation de l'invention.

[Fig.9] La figure 9 est un schéma représentant un dispositif de détection optique, selon des modes de réalisation de l'invention.

[Fig.10] La figure 10 est constituée de deux graphiques (a) et (b) illustrant respectivement l'évolution d'une durée de diffusion $\tau$ et d'un temps de séparation de détection $\delta\tau$ entre deux durées de diffusion en fonction de la longueur L d'un canal micro-fluidique secondaire, selon des modes de réalisation de l'invention.

[Fig.11] La figure 11 est un schéma représentant un dispositif de détection, selon des modes de réalisation de l'invention.

[Fig.12] La figure 12 est un organigramme représentant un procédé d'analyse d'un échantillon par un système analytique en phase gazeuse, selon des modes de réalisation de l'invention.

Des références identiques sont utilisées dans les figures pour désigner des éléments identiques ou analogues. Pour des raisons de clarté, les éléments représentés ne sont pas à l'échelle.

## Description détaillée

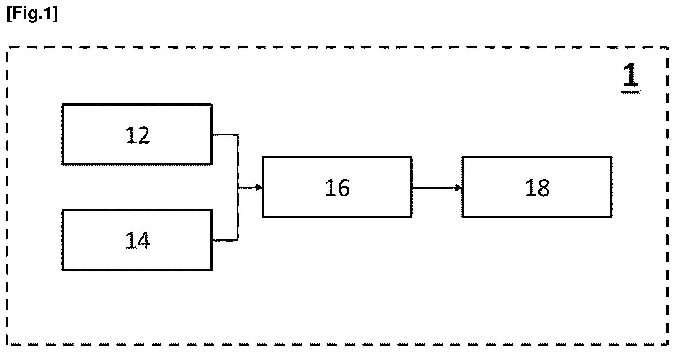

La figure 1 représente schématiquement un système analytique en phase gazeuse 1 (appelé également « système analytique ») comprenant une unité d'injection 12 configurée pour injecter un échantillon à analyser, une unité d'introduction 14 d'un flux de gaz vecteur, une colonne 16 de transport, l'échantillon injecté étant entraîné par le gaz vecteur dans la colonne de transport et un dispositif 18 de détection, selon des modes de réalisation de l'invention.

Un tel échantillon à analyser comprend un composé chimique (c'est-à-dire un type de molécule, une espèce chimique ou un analyte) ou un mélange de composés chimiques à identifier et/ou à quantifier par le système analytique 1.

Le système analytique 1 peut être utilisé dans divers domaines d'analyse de mélange gazeux ou de capteur de gaz, par exemple pour des applications industrielles, de sécurité ou de défense, de santé, d'énergie, ou encore d'environnement.

L'unité d'injection 12 peut être associée par exemple à une micro-seringue d'injection manuelle ou automatique contenant l'échantillon à injecter dans le système analytique 1.

Une fois injecté dans le système analytique 1, l'échantillon à analyser (en phase liquide ou en phase gazeuse) est entrainé par un gaz vecteur, à travers la colonne 16 qui renferme une substance active appelée phase stationnaire. Le gaz vecteur, constituant une phase mobile pour le ou les composés chimiques, peut être par exemple de l'hélium, du dihydrogène, de l'air comprimé, ou encore du diazote maintenu à 1 bar dans l'unité d'introduction 14. L'unité d'introduction d'un flux de gaz vecteur peut donc être configurée pour contenir et réguler l'introduction d'un flux de gaz vecteur contrôlé dans le système analytique 1. L'unité 14 peut comprendre par exemple un détendeur-régulateur. En outre, l'entrainement des composés alors gazeux de l'échantillon, dans la colonne 16, peut être effectué par des unités de pompage et de vannes non représentées sur les figures. La colonne 16 de transport peut être une colonne de chromatographie dite capillaire ou un micro-canal en silicium par exemple. La colonne 16 et une partie au moins de l'unité d'injection 12 peuvent être placées dans une enceinte thermostatée, également non représentée sur les figures, dont la température appliquée est adaptée à la volatilité du ou des composés chimiques de l'échantillon à analyser.

La colonne 16 est caractérisée par une longueur prédéfinie. Par exemple et sans limitations, cette longueur peut être égale à 3 mètres. Le ou les différents composés gazeux traversent la colonne 16 à une vitesse spécifique prédéfinie par leur affinité physico-chimique avec la phase stationnaire. Tel qu'utilisé ici, le terme « affinité physico-chimique », encore appelé « compatibilité physico-chimique » ou « similitude physico-chimique », est associé à l'ensemble des interactions physico-chimiques entre des analytes de l'échantillon et des éléments du système analytique 1. En particulier, en relation avec la colonne 16, le terme « affinité physico-chimique » fait référence à l'ensemble des interactions physico-chimiques entre des analytes traversant la colonne de transport et la substance active de la phase stationnaire impactant ainsi la vitesse d'élution des analytes dans la colonne. Ainsi, un composé gazeux traverse la colonne 16 suivant une durée définie en fonction de la longueur de la colonne et de l'affinité physico-chimique de ce composé avec la phase stationnaire de la colonne. Cette durée pour traverser la colonne 16, encore appelée « temps de rétention » ou encore « temps d'élution », représente ainsi le temps écoulé entre l'injection du composé dans le système analytique 1 et sa sortie de la colonne 16.

Dans le cas d'un échantillon comprenant un mélange de composés chimiques ayant chacun une affinité physico-chimique distincte avec la phase stationnaire, chaque composé du mélange est associé à une vitesse de déplacement distincte dans la colonne 16. Les différents composés chimiques se séparent ainsi spatialement le long de la colonne 16 et sortent de la colonne 16 les uns après les autres, selon un temps de rétention distinct.

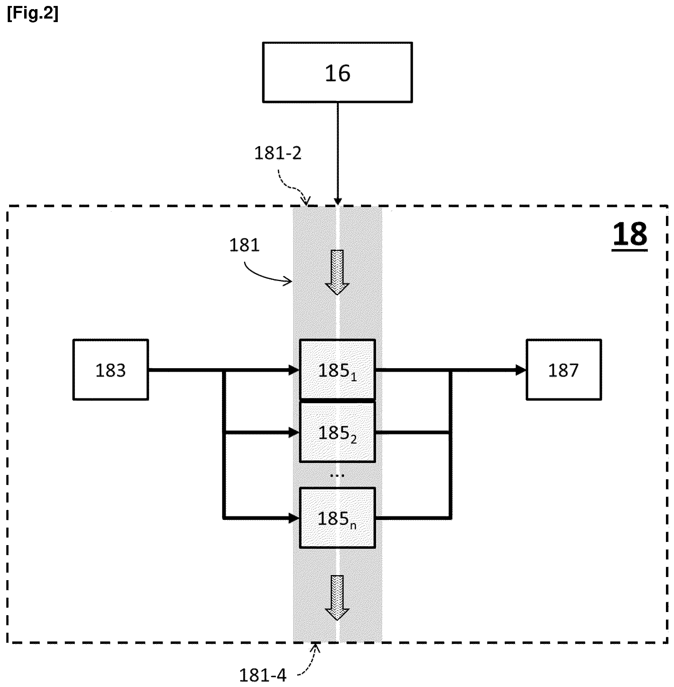

Comme représenté sur la figure 2, le dispositif 18 de détection est connecté à la colonne 16 par une entrée de dispositif 181-2, associée à une structure micro-fluidique, à travers laquelle le ou les composés chimiques à analyser sont transférés.

La structure micro-fluidique peut comprendre un canal micro-fluidique primaire 181 au travers duquel le ou les composés chimiques sont transportés par convection, de l'entrée de dispositif 181-2 jusqu'à une sortie de dispositif 181-4.

Le dispositif 18 de détection comprend en outre une source optique 183, un ou plusieurs capteurs interférométriques de Mach-Zehnder 185 (appelé également 'capteur de mesure' ou 'capteur'), et une unité 187 de détection et de traitement optique. Un capteur interférométrique de Mach-Zehnder 185 est intégré dans la structure micro-fluidique, et connecté et mise en fonctionnement optiquement par la source optique 183.

Dans des modes de réalisation, le ou les capteurs interférométriques de Mach-Zehnder 185 peuvent être positionnés au niveau du canal micro-fluidique primaire 181. Par exemple et sans limitations, le dispositif 18 de détection peut comprendre N capteurs de mesure $185_n$ positionnés au niveau du canal micro-fluidique primaire 181, comme représenté sur la figure 2. Le nombre N de capteurs peut être par exemple un entier positif supérieur ou égal à 1. Le paramètre 'n' désigne un indice associé à un capteur du dispositif de détection et est un entier compris entre 1 et N. Dans ce cas, chaque capteur interférométrique de Mach-Zehnder $185_n$ est configuré pour détecter optiquement le passage d'un composé, ou de plusieurs composés chimiques gazeux de l'échantillon (préalablement séparés spatialement par une colonne 16), transportés par convection et traversant le capteur $185_n$. La détection d'un passage d'au moins un composé consiste à effectuer une mesure optique de la valeur de temps de rétention d'au moins un composé de l'échantillon transporté par convection et traversant le capteur $185_n$. L'unité de détection et de traitement optique 187 du dispositif 18 de détection, connectée au(x) capteur(s) de mesure $185_n$ comme représenté sur la figure 2, peut ainsi être adaptée pour collecter les signaux optiques de détection (ou de mesure), et déterminer le temps de rétention d'au moins un composé de l'échantillon en sortie de la colonne 16 à partir des mesures optiques des capteurs.

Il est à noter que dans un tel canal micro-fluidique primaire 181, les capteurs interférométriques de Mach-Zehnder $185_n$ peuvent être configurés pour détecter simultanément (c'est à dire sensiblement en même temps) le passage d'un composé spécifique. Ainsi, pour un tel dispositif 18 de détection, l'axe de temps associé à l'évaluation numérique de la valeur de temps de rétention du ou des composés de l'échantillon transportés, est avantageusement identique pour chaque capteur $185_n$. L'origine (i.e. le zéro) d'un tel axe de temps unique peut en particulier correspondre à l'instant d'injection de l'échantillon à analyser (en entrée de la colonne 16 de transport). La valeur de temps de rétention d'un analyte correspond alors au temps entre le pic de détection associé de n'importe quel analyte et l'origine relatif à l'axe de temps unique du dispositif 18 de détection.

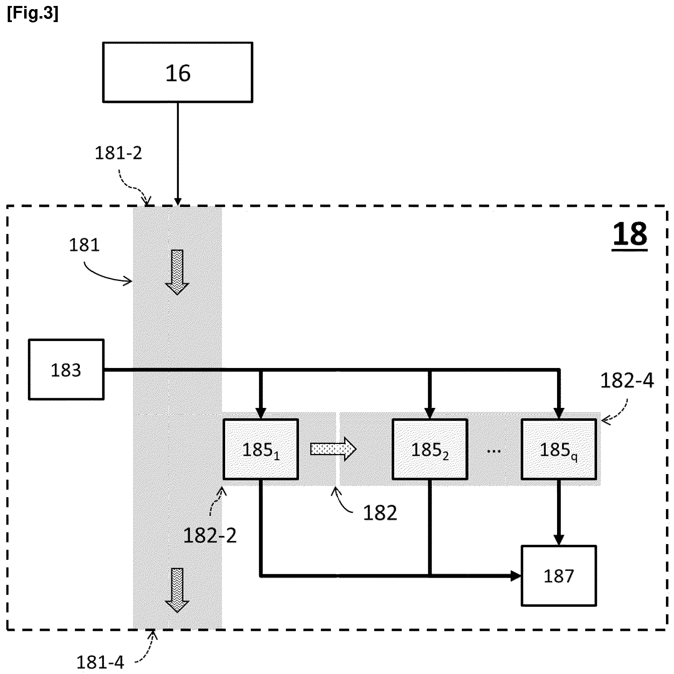

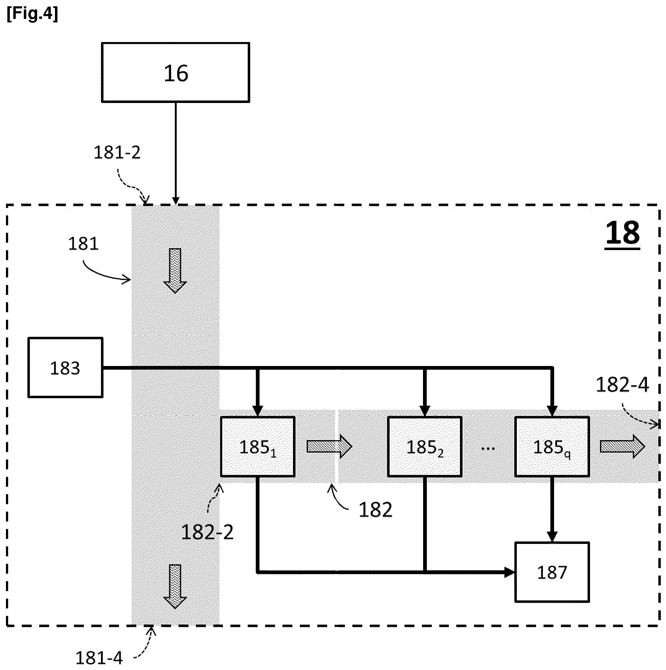

Selon certains modes de réalisation, comme illustré sur le figure 3, la structure micro-fluidique peut comprendre également un canal micro-fluidique secondaire 182 connecté de manière fluidique au canal micro-fluidique primaire 181 par un accès 182-2 et qui se prolonge jusqu'à une terminaison de canal 182-4. Le ou les capteurs interférométriques de Mach-Zehnder 185 peuvent être positionnés au niveau du canal micro-fluidique secondaire 182. Par exemple et sans limitations, le dispositif 18 de détection comprend Q capteurs interférométriques de Mach-Zehnder $185_q$ positionnés au niveau du canal micro-fluidique secondaire 182, comme représenté sur les figures 3 et 4. Le nombre Q de capteur peut être par exemple un entier positif supérieur ou égal à 1. Le paramètre 'q' désigne un indice associé à un capteur du dispositif de détection et est un entier compris entre 1 et Q.

Avantageusement, la terminaison de canal 182-4 peut être scellée (ou fermée) comme représenté sur la figure 3. Dans ce cas, le ou les composés chimiques à analyser sont transportés au travers du canal micro-fluidique secondaire 182 par diffusion. Chaque capteur interférométrique de Mach-Zehnder $185_q$ est ainsi configuré pour détecter optiquement le passage d'un composé ou de plusieurs composés chimiques gazeux de l'échantillon, transportés par diffusion et traversant le capteur $185_q$. La détection d'un passage de composé(s) consiste à effectuer une mesure optique de la valeur de « temps de diffusion relative » d'au moins un composé de l'échantillon transporté par diffusion et traversant le ou les capteurs $185_q$. L'unité de détection et de traitement optique 187 du dispositif 18 de détection, connectée au(x) capteur(s) de mesure $185_q$, peut ainsi être adaptée pour collecter les signaux optiques de mesure et déterminer le temps de diffusion, d'au moins un composé de l'échantillon transporté à travers le canal micro-fluidique secondaire 182 à partir des mesures optiques des capteurs.

Il est à noter que la valeur de temps de diffusion relative mesurée par un capteur dépend de la vitesse de diffusion du composé

Dans des modes de réalisation, le coefficient de diffusion d'un composé (ou vitesse de diffusion dans le canal micro-fluidique) peut être déterminé en fonction de la valeur de temps de diffusion relative mesurée optiquement par un capteur $185_q$ positionné en terminaison (c'est à dire à l'extrémité) de canal 182-4 et de la position du capteur de mesure $185_q$ dans ce canal. Le coefficient de diffusion d'un composé peut être ajusté en tenant compte en outre de la mesure optique d'au moins un capteur positionné au niveau du canal micro-fluidique primaire 181 (capteur $185_n$), c'est-à-dire en prenant en compte la valeur de temps de rétention relatif par le capteur. Le coefficient de diffusion d'un composé peut également être ajusté en tenant compte en outre de la mesure optique d'un capteur positionné par exemple au niveau de l'accès 182-2 en entrée du canal micro-fluidique secondaire 182 (capteur 185$_q$).

Alternativement, la terminaison (ou extrémité) du canal 182-4 peut être ouverte, comme représenté sur la figure 4. Dans ce cas, comme pour le canal micro-fluidique primaire 181, le ou les composés chimiques à analyser sont transportés au travers le canal micro-fluidique secondaire 182 (i.e. formant un canal dit 'débouchant') par convection, et le ou les capteurs interférométriques de Mach-Zehnder 185 positionnés au niveau du canal 182 sont configurés pour mesurer optiquement la valeur de temps de rétention d'au moins un composé de l'échantillon transporté par convection et traversant le ou les capteurs 185.

Le dispositif de détection 18 qui comprend un ou plusieurs canaux micro-fluidiques secondaires 182 à terminaison 182-4 ouverte permet notamment d'augmenter le nombre de capteurs interférométriques de Mach-Zehnder 185 dans le système analytique 1, ainsi que de les adresser (c'est-à-dire les interroger optiquement) de manière simultanée. Une telle configuration de dispositif 18 permet également de régler (ou ajuster) le débit de transport des analytes au niveau de chaque capteur du dispositif 18. Un tel réglage peut être effectué, en particulier de manière passive, par conception et/ou fabrication des canaux micro-fluidiques et en fonction de certains capteurs par exemple pour déterminer le débit optimal de transport des analytes au travers des différents canaux micro-fluidiques (secondaires et/ou primaire).

En outre, le dispositif 18 de détection peut comprendre une fonctionnalisation de la paroi d'un tel canal micro-fluidique secondaire 182 ayant une terminaison de canal ouverte et/ou fermée.

Tel qu'utilisé ici, le terme « fonctionnalisation » fait référence à un revêtement (appelé couche ou encore dépôt) comprenant une ou plusieurs espèces chimiques et/ou une substance physico-chimique, sur un élément de la structure micro-fluidique et/ou sur un élément d'un capteur interférométrique de Mach-Zehnder du dispositif de détection 18, de manière à générer des propriétés physico-chimiques spécifiques à cet élément.

En particulier, la fonctionnalisation de la paroi (c'est-à-dire de la paroi interne) d'un tel canal micro-fluidique secondaire 182, dans des modes de réalisation de l'invention, correspond à un revêtement d'une substance physico-chimique (ou phase stationnaire) sur la paroi du canal. Une telle substance peut être adaptée pour retenir (c'est-à-dire adsorber) certains analytes spécifiques en fonction de son affinité physico-chimique avec les composés chimiques à analyser. Les analytes dits 'retenus' par la substance physico-chimique de la paroi sont alors associés à une valeur de temps de rétention, dans le canal micro-fluidique secondaire 182 fonctionnalisé, plus grande par rapport aux valeurs de temps de rétention des analytes 'non retenus'.

Il est à noter que la substance active (i.e. phase stationnaire) de la colonne 16 de transport correspond à un type de fonctionnalisation de la paroi interne de cette colonne de chromatographie.

Avantageusement, la fonctionnalisation de la paroi du canal micro-fluidique secondaire 182 peut être différente de la fonctionnalisation de la colonne de transport 16, générant ainsi une dimension de chromatographie distincte de la dimension de chromatographie relative à la colonne de chromatographie.

Par exemple et sans limitation, le canal micro-fluidique secondaire 182 ayant une terminaison de canal ouverte peut correspondre alors à un canal de mesure chromatographique. Un tel système de chromatographie dit 2D (i.e. bidimensionnel ou à deux dimensions) issu du couplage des résultats de deux séparations chromatographiques de nature différente (colonne de transport 16 et canal micro-fluidique secondaire 182) permet d'améliorer l'analyse des mélanges complexes de composés chimiques à séparer ayant des affinités physico-chimiques sensiblement similaires. En particulier, un tel système de chromatographie 2D permet de séparer des composés au travers de le canal micro-fluidique secondaire 182 qui n'ont pas été précédemment séparés au travers de la colonne de transport 16 de chromatographie. Un système de chromatographie 2D utilisant au moins deux séparations chromatographiques à phase stationnaire ayant des propriétés physico-chimiques opposées permet notamment de vérifier ou contrôler d'éventuels croisements (ou chevauchements) entre pics de détection. Par exemple et sans limitations, le système analytique 1 peut comprendre une colonne de transport 16 dite « polaire » et un canal micro-fluidique secondaire 182 dit « apolaire ». Dans ce cas, un composé « polaire » peut être associé à une valeur de temps de rétention, obtenue en sortie de la colonne polaire 16, plus grande par rapport à la valeur de temps de rétention d'un composé « apolaire ». Le même composé polaire peut être ensuite associé à une valeur de temps de rétention, obtenue en extrémité du canal apolaire 182, plus petite ou similaire par rapport à la valeur de temps de rétention du composé apolaire. L'utilisation de canaux comprenant des capteurs interférométriques de Mach-Zehnder 185 pour un système de chromatographie 2D permet une rapidité de mesure et un suivi en temps réel optimisé des mesures de détection, même sur de petites dimensions de canaux 181 et 182.

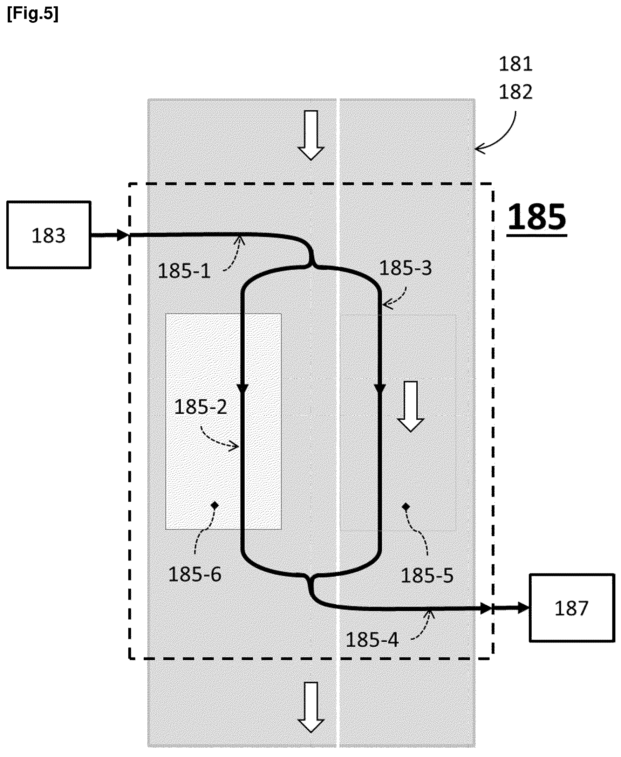

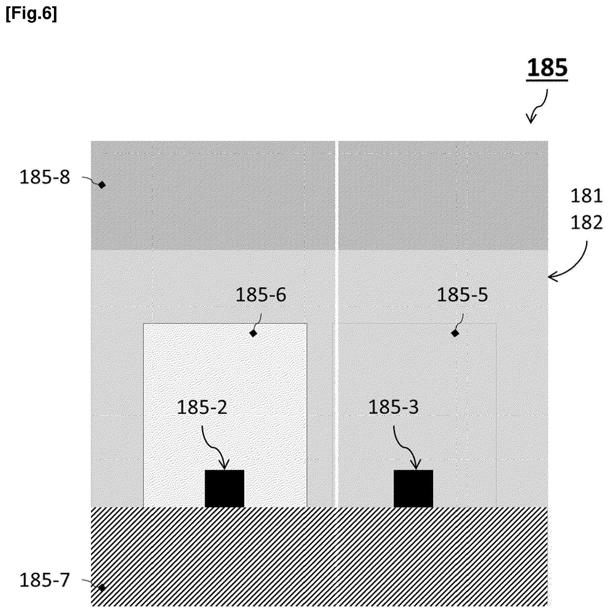

La figure 5 et la figure 6 représentent respectivement une vue schématique et une vue en coupe d'un capteur interférométrique de Mach-Zehnder 185 (i.e. capteur 185$_n$ ou 185$_q$). Le capteur interférométrique de Mach-Zehnder 185 est alimenté (ou mis en œuvre) par la source optique 183 adaptée pour produire un rayonnement électromagnétique (encore appelé 'signal optique'). Par exemple et sans limitations, la source optique 183 peut être un laser ou une diode visible ou proche infra-rouge configurée pour émettre un faisceau à une longueur d'onde de 800nm, de 1310nm ou encore de 1550nm. La longueur d'onde d'émission de la source optique 183 peut alternativement être supérieure à 3μm par exemple.

Le signal optique initial provenant de la source optique 183, se propage initialement dans l'espace libre ou dans une fibre optique couplée à un premier guide d'onde de couplage 185-1 du capteur interférométrique de Mach-Zehnder 185. Le signal optique initial est ainsi dirigé vers un séparateur directionnel de faisceaux, comme représenté sur la figure 5. Un tel séparateur peut être un coupleur optique symétrique de type 50/50 (par exemple en Y fibré).

Le séparateur directionnel est configuré pour séparer le signal optique initial transmis par la source optique 183 via le premier guide d'onde de couplage 185-1 en une composante de référence du signal et une composante de mesure du signal, se propageant respectivement vers un guide d'onde de référence 185-2 (encore appelé 'bras de référence') et un guide d'onde de mesure 185-3 (encore appelé 'bras sensible').

Les deux composantes du signal transmis au travers du bras de référence 185-2 et du bras sensible 185-3 sont ensuite dirigées vers un combineur directionnel de faisceaux configuré pour les recombiner sur un deuxième guide d'onde de couplage 185-4 (c'est-à-dire sur un unique chemin optique) en un signal optique de mesure. Un tel combineur peut également être un coupleur optique symétrique Y fibré de type 50/50.

Le signal optique de mesure est ainsi dirigé vers l'unité de détection et de traitement optique 187, via un guide d'onde, un couplage dans une fibre optique ou selon une propagation dans l'espace libre. En particulier, l'unité de détection et de traitement optique 187 est adaptée pour détecter le signal optique de mesure de manière à générer un signal représentatif de l'évolution au cours du temps de l'intensité lumineuse détectée résultant de l'interférence entre la composante de référence du signal et la composante de mesure du signal. Par exemple et sans limitations, l'unité 187 peut comprendre au moins une photodiode.

Tandis que le bras sensible 185-3 du capteur interférométrique de Mach-Zehnder 185 est exposé au(x) composé(s) chimique(s) à analyser transporté(s) dans le milieu d'exposition 185-5, le bras de référence 185-2 du capteur interférométrique de Mach-Zehnder 185 est encapsulé à l'aide d'une couche d'encapsulation 185-6 imperméable au(x) composé(s) chimique(s) à analyser.

Le milieu d'exposition 185-5 correspond au canal micro-fluidique primaire 181 ou au canal micro-fluidique secondaire 182 au niveau du capteur 185. En d'autres termes, le canal micro-fluidique 181 ou 182 traverse le ou les capteurs interférométriques de Mach-Zehnder 185. Par exemple et sans limitations, le premier guide d'onde de couplage 185-1, le bras de référence 185-2 encapsulé dans la couche d'encapsulation 185-6, le bras sensible 185-3 et le deuxième guide d'onde de couplage 185-4 peuvent être positionnés dans le canal micro-fluidique 181 ou 182, comme représenté sur les figures 5 et 6. Dans d'autres exemple, seulement le bras sensible 185-3 peut être positionné dans le canal micro-fluidique 181 ou 182 alors plus étroit que le capteur 185.

Lors de leur passage par convection ou par diffusion au travers du milieu d'exposition 185-5 (i.e. au travers du canal micro-fluidique 181 ou 182), le ou les composés chimiques à analyser induisent une modification de l'indice de réfraction local perçu par la partie évanescente du champ électromagnétique de la composante de mesure du signal se propageant dans le guide d'onde de mesure 185-3, induisant une modification temporaire de son indice optique effectif. Parallèlement, la couche d'encapsulation 185-6 est configurée pour que le guide d'onde de référence 185-2 ne subisse aucune modification de son indice effectif, en particulier lors de la traversée du capteur 185 par un analytique, n'affectant pas la propagation de la composante de référence du signal. La couche d'encapsulation 185-6 peut par exemple être un revêtement de dioxyde de silicium.

L'homme du métier comprendra que la conception matérielle et la fabrication du capteur interférométrique de Mach-Zehnder 185 dépend de la nature et de la longueur d'onde du faisceau utilisé, émis par la source optique 183, pour mettre en œuvre le capteur photonique-optique. De même, l'unité de détection et de traitement optique 187 peut être choisie et adaptée pour collecter les signaux optiques de mesure en sortie des capteurs 185 (c'est-à-dire en particulier en fonction de la longueur d'onde, de la puissance des signaux, de la fréquence, etc.).

Il est à noter que le changement d'indice optique effectif qui se produit dans le bras sensible 185-3 se traduit par un déphasage entre la composante de référence du signal et la composante de mesure du signal, ce qui induit le signal d'interférence mesurable par l'unité de détection et de traitement optique 187. La modification de l'indice optique effectif du guide d'onde de mesure 185-3 étant déterminée notamment en fonction de la quantité de molécules adsorbées, l'amplitude d'une telle modification d'indice peut être, en première approximation, proportionnelle à la concentration d'un même composé chimique à analyser traversant le milieu d'exposition 185-5.

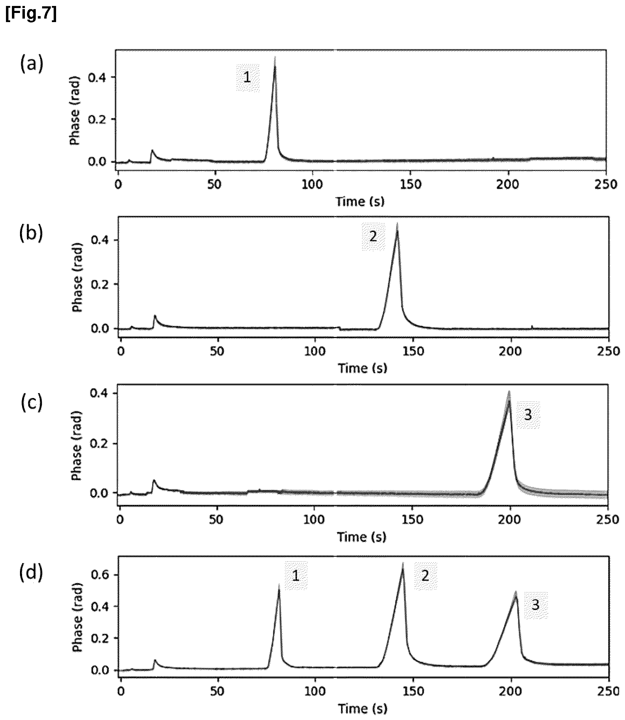

La figure 7 représente des exemples de graphiques illustrant des résultats d'analyse de composés chimiques par l'unité de détection et de traitement optique 187 du système analytique 1. En particulier, la figure 7 représente des pics de détection dits chromatographiques correspondant à la détection de composés chimiques spécifiques par un ou plusieurs capteurs interférométriques de Mach-Zehnder 185. Ces pics de détection sont associés en abscisse à des temps de rétention déterminés pour les composés chimiques détectés : un composé d'heptane (C7, pic n°1 sur la figure 7), un composé de toluène (pic n°2) et un composé d'octane (C8, pic n°3), initialement préparés dans une solution de 1mL de solvant huile minérale, séparément (graphiques (a), (b) et (c) de la figure 7) ou en mélange (graphique (d) de la figure 7).

L'ensemble des guides d'ondes du capteur interférométrique de Mach-Zehnder 185, formant le circuit optique intégré du capteur, peut être positionné sur une couche support (ou couche substrat) 183-7 constituée, par exemple, d'une couche de silicium (ou 'wafer de silicium') et d'une couche de dioxyde de silicium, encore appelée 'BOX SiO$_2$ thermique'.

Un tel circuit optique intégré comprend également une couche capot 183-8 comme représenté sur la figure 6. Par exemple et sans limitations, la couche capot 183-8 peut être constituée d'une couche de silicium ou d'une couche en verre, gravée pour former le canal micro-fluidique traversant le capteur 185, et collé par un procédé de collage tel qu'un procédé de sérigraphie ou un procédé de scellement anodique.

Dans des modes de réalisation, le bras sensible 185-3 et le bras de référence 185-2 peuvent être constitués d'un guide d'onde droit comme représentés sur la figure 5, ou encore constitués de plusieurs segments de guides d'onde droits définis suivant l'axe du canal et reliés par des segments de guides d'onde courbes (ou coudes) non représentés sur les figures.

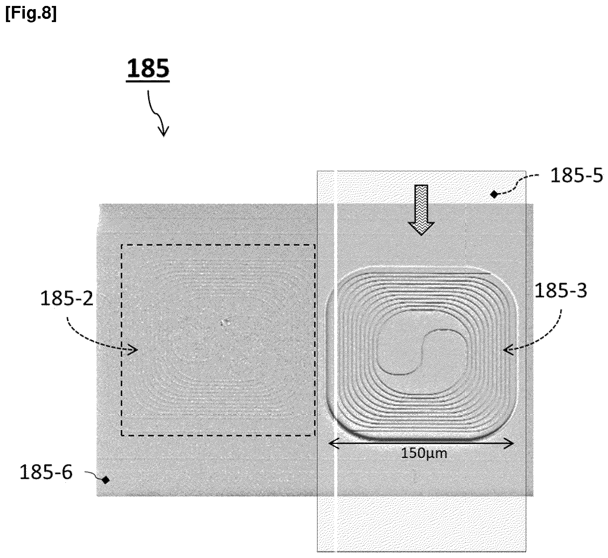

Dans d'autres modes de réalisation, le bras sensible 185-3 et le bras de référence 185-2 peuvent être des guides d'onde en spirales d'enveloppe carrée comme représenté sur la figure 8, d'enveloppe circulaire ou elliptique, ou encore d'enveloppe rectangulaire définie suivant l'axe du canal (non représenté sur les figures).

Une configuration de bras en spirales ou comprenant plusieurs segments de guides d'onde droits permet une longueur de bras importante et donc une sensibilité élevée associée au bras sensible 185-3. En outre, une configuration en spirale d'enveloppe carrée peut être avantageusement utilisée dans un capteur interférométrique de Mach-Zehnder 185 positionné au niveau d'un canal micro-fluidique secondaire 182 puisqu'elle permet d'obtenir un capteur compact adéquat pour la mesure ponctuelle de temps de diffusion.

Avantageusement, un capteur interférométrique de Mach-Zehnder 185 peut comprendre une fonctionnalisation du bras sensible 185-3 de manière à moduler la sensibilité du bras en fonction des propriétés physico-chimiques des composés chimiques à analyser.

En particulier, la fonctionnalisation (ou couche de fonctionnalisation) du bras sensible 185-3 d'un capteur interférométrique de Mach-Zehnder ($185_n$ et/ou $185_q$), dans des modes de réalisation de l'invention, correspond à un revêtement d'une ou plusieurs espèces chimiques sur (c'est-à-dire recouvrant) la surface du guide d'onde du bras sensible de mesure. Une telle couche de fonctionnalisation peut être adaptée pour adsorber préférentiellement un ou plusieurs des composés chimiques spécifiques traversant le milieu d'exposition 185-5, ce qui permet une meilleure détection du ou des composés ciblés. En particulier, la couche de fonctionnalisation permet d'obtenir une information spécifique supplémentaire à celle déjà obtenue grâce à la colonne de chromatographie. La couche de fonctionnalisation augmente notamment la capacité du système à identifier spécifiquement des composés, quand bien même ces derniers ne seraient que peu séparés par la colonne de chromatographie.

Avantageusement, un grand nombre N et/ou Q de capteurs interférométriques de Mach-Zehnder ($185_n$ et/ou $185_q$), comprenant des fonctionnalisations différentes notamment, permet de déterminer un grand nombre d'informations différentes relatives à chaque composé détecté de l'échantillon à analyser. Par exemple et sans limitation, pour chaque composé noté $C_i$ de l'échantillon à analyser, la détection du composé par à un capteur ($185_n$ et/ou $185_q$) est associée à une valeur de score (i.e. de paramètre ou de poids) déterminée à partir d'une ou plusieurs grandeurs relatives au pic de détection (c'est-à-dire au signal de mesure) du capteur considéré pour ce composé. Une telle valeur de score, notée $s_{in}$ et/ou $s_{iq}$, peut être déterminée à partir de la hauteur du pic (i.e. valeur du pic selon l'axe des ordonnées sur la figure 7 par exemple), et/ou de la largeur du pic à mi-hauteur, aire du pic, la forme du pic, etc., ou plus généralement toute mesure associée au pic du signal de mesure issu du capteur 185 relatif à l'adsorption et/ou à la désorption de l'analyte par ce capteur. Chaque valeur de score déterminée ($s_{in}$ et/ou $s_{iq}$) correspond alors à une information supplémentaire d'un composé $C_i$ de l'échantillon à analyser (relatif à un temps de rétention donné apporté par la colonne 16 et/ou un temps de diffusion) donné par un capteur ($185_n$ et/ou $185_q$) précis et caractéristique de propriété physico-chimique spécifique. Ainsi, l'ensemble noté $S_i$ des valeurs de score d'un composé $C_i$ forme la signature physico-chimique de ce composé au travers le dispositif de détection 18. La signature $S_i$, unique pour chaque composé $C_i$ à analyser, peut donc s'écrire selon l'expression (01) ci-dessous :

$$S_i = \left\{ s_{i1}, \ldots, s_{iN} \text{ et/ou } s_{iQ} \right\} \qquad (01)$$

L'évaluation d'une signature $S_i$ permet ainsi de déterminer efficacement la nature du composé $C_i$. Une telle évaluation peut être effectuée à partir de la comparaison des différentes valeurs de score du composé $C_i$ par exemple, et notamment en prenant en compte une comparaison avec d'autres valeurs de score relatives à d'autres composés ou une analyse selon de telles valeurs.

L'utilisation des signatures S permet l'identification plus robuste des composés de l'échantillon par rapport à une simple estimation à partir de temps de diffusion et/ou de temps de rétention, ces temps pouvant s'avérer similaires pour plusieurs composés à différencier.

A titre d'exemple, la fonctionnalisation (ou couche de fonctionnalisation) du bras sensible 185-3 d'un capteur interférométrique de Mach-Zehnder ($185_n$ et/ou $185_q$) peut correspondre à une fonctionnalisation « polaire » adaptée pour augmenter la sensibilité de détection du bras sensible 185-3 aux composés polaires et diminuer la sensibilité aux composés apolaires. Des chimies de polarités plus ou moins importantes associées à des capteurs de mesure 185 distincts induisent une affinité physico-chimique plus ou moins importante avec de tels analytes gazeux spécifiques suivant leur polarité. Ceci induit des variations d'intensité/de phase optique au niveau du bras sensible 185-3 plus ou moins importantes en fonction du capteur $185_n$ ou $185_q$ impliqué. Les variations de réponse optique entre une pluralité de capteurs fonctionnalisés différemment sont quantifiables et permettent de positionner l'analyte spécifique sur une échelle de polarité.

Par exemple et sans limitations, une couche de fonctionnalisation déposée sur le guide d'onde de mesure 185-3 peut être constituée d'un dépôt de film mince par pulvérisation cathodique, d'un ou de plusieurs dépôts chimiques en phase vapeur qui peuvent être associés à un traitement plasma, d'une couche obtenue par greffage utilisé par exemple en chromatographie pour la fonctionnalisation de phase stationnaires, ou encore d'une couche obtenue par greffage en phase liquide de biomolécules par dépôt de microgouttes comme décrite par exemple dans les articles "A silicon photonic olfactory sensor based on an array of 64 biofunctionalized Mach-Zehnder interferometers" de Laplatine, L. et al., Optics Express 30(19), 33955-33968 (2022).

En outre, chaque capteur interférométrique de Mach-Zehnder 185 (i.e. capteur $185_n$ et/ou $185_q$) peut comprendre une fonctionnalisation particulière associée à un des composés chimiques différents à détecter par convection et/ou par diffusion. Les pics chromatographiques obtenus au niveau de l'unité 187 peuvent permettre de caractériser le rapport des réponses des capteurs 185 associées à différentes chimies de polarités.

Il est à noter que le canal micro-fluidique primaire 181 et/ou le canal micro-fluidique secondaire 182 du dispositif 18 de détection peuvent être caractérisés par un volume de cavité fluidique suffisamment faible afin d'éviter l'élargissement des pics de détection obtenu au niveau de l'unité 187. Typiquement, un tel volume de cavité fluidique peut être inférieur à un micro litre ($\mu$L). Un canal micro-fluidique peut par exemple être représenté par une cavité ayant une hauteur de 200$\mu$m et une largeur de 400$\mu$m, dans le plan de coupe de la cavité perpendiculaire à la direction de propagation (i.e. de convection) des composés. Le canal micro-fluidique peut également être représenté par une cavité ayant une hauteur de 200$\mu$m et une largeur de 200$\mu$m, dans le mode où seulement le bras sensible 185-3 peut être positionné dans le canal micro-fluidique 181 ou 182 qui est dans ce cas plus étroit que le capteur 185.

Il est à noter qu'à la transition entre la colonne de transport 16 et le canal micro-fluidique primaire 181, c'est-à-dire à l'entrée de dispositif 181-2, les composés chimiques à détecter peuvent subir une réduction de volume de transport par convection, dit 'volume mort'.

Par ailleurs, un canal micro-fluidique primaire 181 peut être dimensionné pour une longueur de canal de 1mm, dans le sens de déplacement des composés.

Avantageusement, le dispositif 18 de détection, et en particulier la structure micro-fluidique, peut comprendre une pluralité de canaux micro-fluidique secondaires 182, chaque canal comprenant un capteur $185_q$ positionné en terminaison de canal 182-4 et caractérisé par une longueur de canal distinct, comprise par exemple et sans limitation entre 1 et 10mm.

De telles longueurs de canal (181 et/ou 182) sont compatibles avec l'incorporation du plusieurs capteurs interférométriques de Mach-Zehnder ($185_n$ et/ou $185_q$) de surface unitaire typique de bras sensible 185-3 de 200$\mu$m par 200$\mu$m.

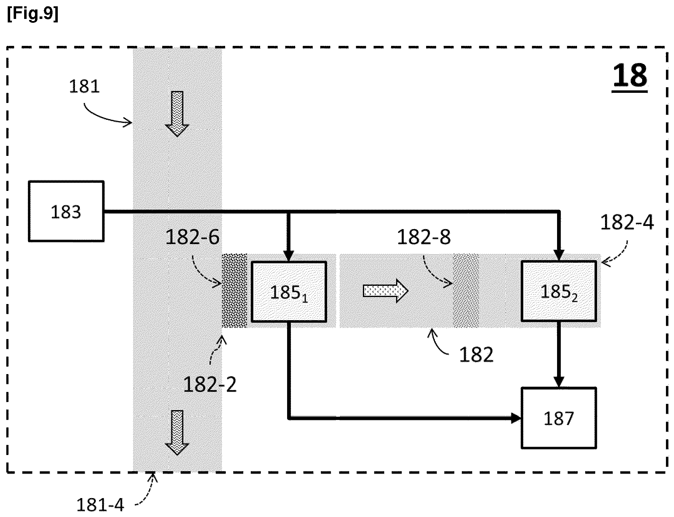

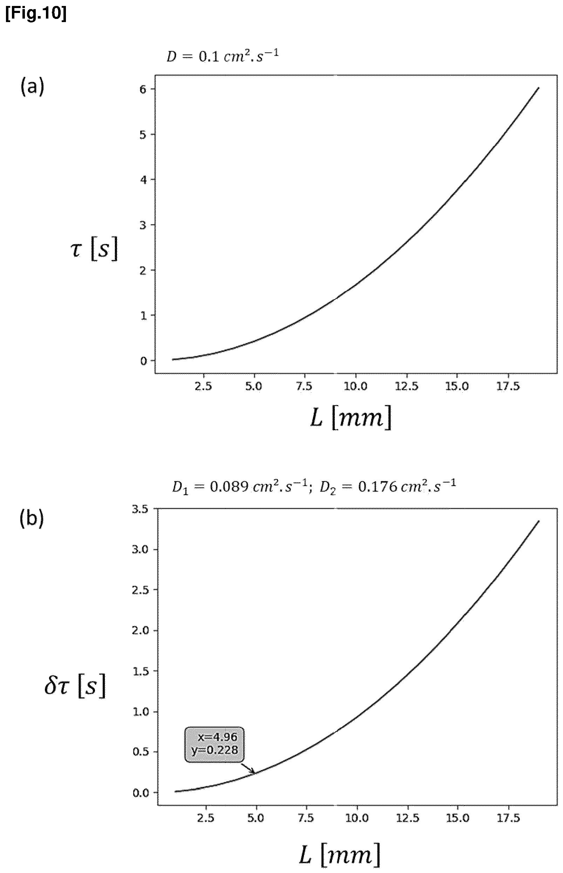

Dans des modes de réalisation, deux capteurs de mesure $185_q$ positionnés respectivement en entrée (accès 182-2) et en sortie (terminaison 182-4) du canal micro-fluidique secondaire 182, comme représenté sur la figure 9, permettent de déterminer la durée de diffusion $\tau$ nécessaire à un ou plusieurs composés chimiques, pour parcourir par diffusion la longueur L de ce canal 182. La figure 10(a) illustre l'évolution de la durée de diffusion $\tau$ en fonction de la longueur L d'un canal micro-fluidique secondaire 182, obtenue à partir de l'équation (02) décrite ci-dessous :

$$\tau = \frac{1}{6} \times \frac{L^2}{D} \qquad (02)$$

Dans l'équation (02), le paramètre D correspond au coefficient de diffusion d'un composé chimique à détecter. La valeur de D utilisée dans l'équation (02) peut être calculée (à partir de l'équation de Chapman-Enskog par exemple) ou extraites de tables. Par exemple et sans limitations, le coefficient D peut être égal à 0.1 $cm^2.s^{-1}$, comme dans l'exemple de la figure 10(a). Pour un exemple de longueur L de canal 182 de 3 mm, la durée de diffusion $\tau$ nécessaire d'un composé chimique ayant un tel coefficient de diffusion est de 150 ms. Pour un exemple de longueur L de 10 mm, la durée de diffusion $\tau$ est de 1,6 s. Une telle architecture de dispositif 18 de détection comprenant un ou plusieurs canaux micro-fluidique secondaires 182 permet donc à un composé chimique d'avoir le temps de diffuser dans le canal micro-fluidique secondaire 182 sur une durée inférieure à la durée nécessaire de ce composé pour traverser le canal micro-fluidique primaire 181, typiquement de plusieurs secondes. En utilisant plusieurs canaux micro-fluidiques secondaires 182 de différentes longueurs L et/ou de différentes fonctionnalisations, il est possible de pouvoir adresser une large gamme de coefficients de diffusion des composés chimiques à analyser.

Un temps de séparation de détection $\delta\tau$ correspond à la différence entre des durées de diffusion de deux composés détectés par exemple par un capteur $185_q$. Par exemple, comme représenté sur la figure 10(b), pour une longueur L de canal 182 de 5 mm, la séparation de détection $\delta\tau$ entre la détection d'un composé benzène (de valeur de coefficient de diffusion $D_1 = 0.089$ cm$^2$.s$^{-1}$) et la détection d'un composé formaldéhyde (de valeur de coefficient de diffusion $D_2 = 0.176$ cm$^2$.s$^{-1}$) est d'environ 200 ms. Une telle architecture de dispositif 18 de détection comprenant au moins un canal micro-fluidique secondaire 182 permet également de détecter deux composés chimiques ayant des coefficients de diffusion relativement voisins.

De ce fait, l'unité de détection et de traitement optique 187 du dispositif 18 de détection peut ainsi être adaptée pour déterminer une information spécifique sur la diffusivité (représentée par le coefficient de diffusion) d'au moins un composé de l'échantillon transporté à travers un canal micro-fluidique secondaire 182 à partir des valeurs de temps de diffusion de composés déterminées et de la géométrie du canal.

Avantageusement, un canal micro-fluidique secondaire 182 du dispositif 18 de détection peut comprendre un ou plusieurs micro-obstacles et/ou nano-obstacles dits physiques, disposés localement dans le canal, comme représenté sur la figure 9. De tels obstacles peuvent être par exemple des piliers 182-6 positionnés au niveau de l'accès 182-2 du canal de manière à minimiser tout phénomène convectif en entrée du canal 182 et optimiser le transport des composés chimiques par diffusion spécifiquement. De tels obstacles peuvent également être tout autre obstacle physique 182-8 positionné dans le canal pour ralentir le phénomène de diffusion de certains composés chimiques. Un tel ralentissement de diffusion permet éventuellement d'adresser une plus large gamme de coefficients de diffusion de composés chimiques nécessitant autrement une longueur L de canal de diffusion 182 trop importante, ou encore d'augmenter le temps de séparation de détection $\delta\tau$ entre deux composés chimiques à coefficients de diffusion très proches. Des obstacles de canal peuvent être constitués par exemple et sans limitations d'une couche de silicium comprenant une membrane poreuse. Des obstacles de canal peuvent également être constitués d'une couche mince de silice poreuse, telle qu'une matrice de silice poreuse obtenue par un procédé de fabrication sol-gel généré directement dans le canal micro-fluidique secondaire 182 au cours de sa fabrication ou insérée mécaniquement post fabrication.

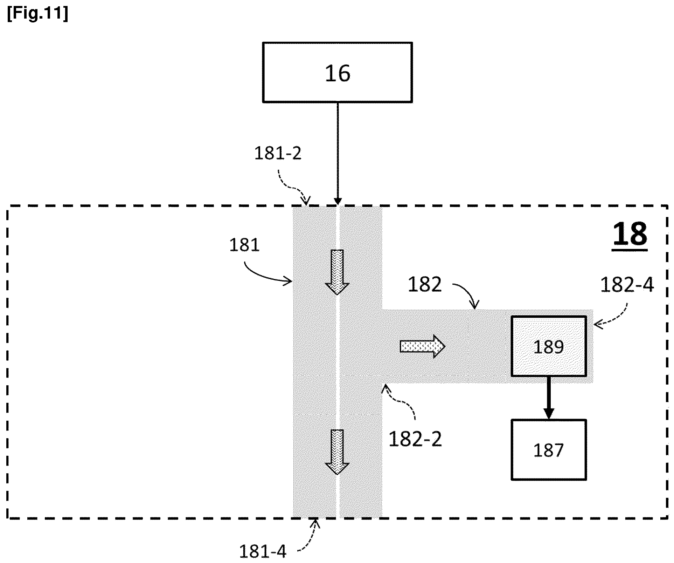

Dans des modes de réalisation, le dispositif 18 de détection, et en particulier la structure micro-fluidique, peut comprendre au moins un canal micro-fluidique secondaire 182 dont la terminaison de canal 182-4 est scellée de manière à ce que le ou les composés chimiques à analyser sont transportés par diffusion au travers du canal. Le canal comprend un ou plusieurs capteurs physiques 189 connectés à l'unité de détection et de traitement optique 187. Avantageusement, le canal 182 comprend un capteur physique 189 positionné en terminaison (c'est à dire à l'extrémité) du canal 182-4, comme représenté sur la figure 11. De tels capteurs physiques 189 peuvent être des capteurs interférométriques de Mach-Zehnder 185, et/ou d'autres types capteurs physiques, tels que par exemple des micro-détecteurs de conductivité thermique (noté $\mu$TCD), des transducteurs ultrasonique micro-usiné capacitif (noté cMUT), des transducteurs ultrasoniques micro-usinés piézoélectriques (noté pMUT), des anneaux résonnants, des détecteurs de pression à onde de Lamb, etc.

Dans des modes de réalisation, le dispositif 18 de détection peut comprendre un ou plusieurs capteurs de référence (non représenté sur les figures) configurés pour ajuster, par calibration, les valeurs de mesures obtenues par l'unité de détection et de traitement optique 187 à partir des signaux optiques de mesure générés par les capteurs de mesures 185. Une telle calibration permet notamment de compenser certaines variations de paramètres dues à des fluctuations physiques et environnementales pouvant être subies par le système analytique en phase gazeuse 1, comme des fluctuations de température, des fluctuations de pression lors de l'injection de l'échantillon à analyser, ou encore des fluctuations de longueur d'onde du laser lors de l'acquisition des données.

Un capteur de référence peut par exemple correspondre à un capteur type capteur interférométrique de Mach-Zehnder, dont les deux bras interférométriques (ou guides d'onde interférométriques) sont soit des bras de référence (imperméables au(x) composé(s) chimique(s) à analyser), soit des bras sensibles (exposés au(x) composé(s) chimique(s) à analyser).

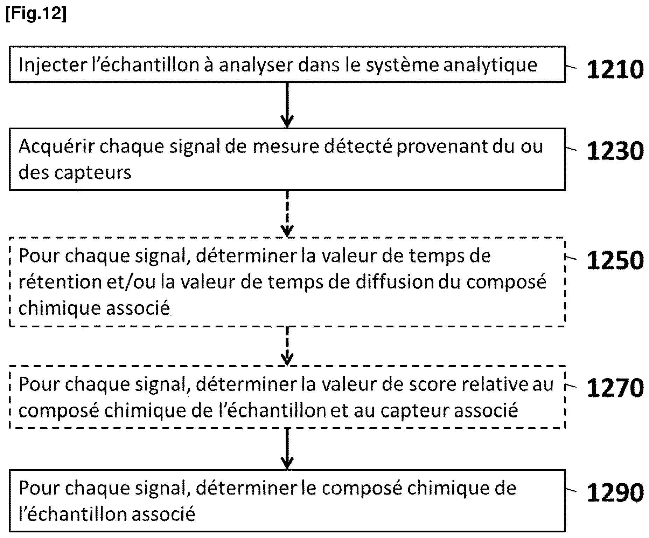

La figure 12 représente le procédé d'analyse d'un échantillon comportant au moins un composé chimique et mettant en œuvre un système analytique en phase gazeuse 1, selon des modes de réalisation de l'invention.

Le procédé comprend une étape initiale 1210 consistant à injecter l'échantillon à analyser dans le système analytique 1.

Le ou les composés chimiques transportés dans la colonne 16 traversent alors le ou les capteurs de mesures 185, générant pour chaque capteur et chaque composé chimique détecté un signal optique de mesure.

Le procédé comprend ainsi une étape initiale 1230 consistant à acquérir par l'unité de détection et de traitement optique 187 chaque signal optique de mesure provenant du ou des capteurs de mesures 185.

A l'étape 1290, chaque signal optique de mesure détecté provenant du ou des capteurs de mesures 185 est associé à un composé chimique de l'échantillon à analyser.

Avantageusement, le procédé peut en outre comprendre une étape 1250 consistant à déterminer la valeur de temps de rétention et/ou la valeur de temps de diffusion relative au composé chimique associé à chaque signal optique de mesure.

Dans le cas où le dispositif 18 de détection comprend une pluralité de capteurs de mesures ($185_n$ et/ou $185_q$) fonctionnalisés différemment, le procédé peut également comprendre une étape 1270 consistant à déterminer pour chaque signal optique de mesure détecté (correspondant à un composé chimique spécifique $C_i$ et un capteur particulier n et/ou q) une valeur de score ($s_{in}$ et/ou $s_{iq}$) relative à une information complémentaire pour former la signature $S_i$ du composé. A cette étape, l'évaluation de la signature $S_i$ du ou des composés chimiques $C_i$ à analyser peut être effectuée pour détermination la nature de ces composé.

Dans des modes de réalisation, le procédé peut comprendre une étape additionnelle de calibration des capteurs par rapport aux variations potentielles de paramètres environnementaux à partir de capteurs de référence positionnés dans le dispositif 18 de détection.

L'homme du métier comprendra aisément que certaines étapes du procédé de la figure 12 (en particulier les étapes 1250 et 1270) peuvent être réalisées de manière simultanée, séquentielle, indépendante ou non, et/ou selon un ordre différent, par exemple selon un ordre défini par le système 1 ou l'unité 187.

Il convient de noter que certaines caractéristiques de l'invention peuvent présenter des avantages lorsqu'elles sont considérées séparément.

Le dispositif et les procédés décrits précédemment selon les modes de réalisation de l'invention ou des sous éléments de ce système peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes.

L'invention est définie dans les revendications et n'est pas limitée aux modes de réalisation décrits ci-avant à titre d'exemple non limitatif. Elle englobe toutes les variantes de réalisation qui pourront être envisagées par l'homme du métier dans l'étendue de la protection définie par les revendications. En particulier, l'homme du métier comprendra que l'invention n'est pas limitée aux différents canaux micro-fluidiques, aux différents capteurs de mesure, ou aux différentes configurations du dispositif de détection décrits à titre d'exemple non limitatif. En particulier, certains modes de réalisation de l'invention peuvent être combinés.

## Revendications

1. Système analytique en phase gazeuse (1) comprenant une unité d'injection (12) configurée pour injecter un échantillon à analyser comprenant au moins un composé chimique, une unité (14) d'introduction d'un flux de gaz vecteur, une colonne (16) de transport, et un dispositif de détection (18), ledit au moins un composé chimique étant entraîné par le gaz vecteur dans la colonne de transport jusqu'au dispositif de détection (18), ledit dispositif de détection (18) étant

   un détecteur optique comprenant au moins un capteur interférométrique de Mach-Zehnder (185) alimenté par une source optique (183) et intégré dans une structure micro-fluidique (181 ; 182), ledit capteur (185) comprenant un bras sensible (185-3) exposé audit au moins un composé chimique et un bras de référence (185-2) imperméable audit au moins un composé chimique, ledit au moins un capteur (185) étant adapté pour détecter optiquement le passage dudit au moins un composé chimique au travers dudit bras sensible (185-3), **caractérisé en ce que** ladite structure micro-fluidique comprend
   un canal micro-fluidique primaire (181) et/ou au moins un canal micro-fluidique secondaire (182) scellé au niveau de l'extrémité (182-4) de canal, ledit au moins un composé chimique étant transporté par convection au travers du canal primaire (181) et/ou par diffusion au travers du canal secondaire scellé (182), ledit au moins un capteur (185) étant positionné sur ledit canal primaire (181) et/ou ledit canal secondaire scellé (182), ledit dispositif de détection (18) étant arrangé pour déterminer le temps de rétention et/ou le coefficient de diffusion dudit au moins un composé chimique en sortie de la colonne (16) à partir de la détection optique du passage dudit au moins un composé chimique au travers dudit capteur (185).

2. Système analytique (1) selon la revendication 1, dans lequel ledit au moins un capteur interférométrique de Mach-Zehnder (185) comprend un revêtement sur ledit bras sensible (185-3), ledit revêtement étant adapté pour adsorber préférentiellement ledit au moins un composé chimique.

3. Système analytique (1) selon l'une des revendications précédentes, dans lequel chaque canal micro-fluidique secondaire scellé (182) a une longueur L distincte de canal définie dans le sens de déplacement dudit au moins un composé chimique.

4. Système analytique (1) selon l'une des revendications précédentes, dans lequel ledit au moins un canal micro-fluidique secondaire scellé (182) comprend au moins un obstacle (182-6 ou 182-8) physique disposé localement dans ledit canal (182), ledit obstacle (182-6 ou 182-8) étant adapté pour minimiser tout phénomène convectif en entrée dudit canal (182) et/ou pour ralentir le phénomène de diffusion dudit composé chimique à détecter.

5. Système analytique (1) selon l'une des revendications précédentes, dans lequel la structure micro-fluidique comprend en outre au moins un canal micro-fluidique secondaire (182) ouvert au niveau de l'extrémité (182-4) de canal, ledit au moins un composé chimique étant transporté par convection au travers du canal micro-fluidique secondaire ouvert (182).

6. Système analytique (1) selon l'une des revendications précédentes, dans lequel ledit moins un canal micro-fluidique secondaire ouvert et/ou scellé (182) comprend un revêtement comprenant une substance physico-chimique sur la paroi du canal (182).

7. Procédé d'analyse d'un échantillon comprenant au moins un composé chimique, le procédé comportant au moins les étapes suivantes :

   - Injecter (1210) l'échantillon à analyser dans le système analytique en phase gazeuse (1) selon l'une des revendications 1 à 6 précédentes ;
   - Acquérir (1230) au moins un signal optique de mesure détecté par au moins un capteur interférométrique de Mach-Zehnder (185) dudit système analytique en phase gazeuse (1) ;
   - Associer (1290) audit au moins un signal optique de mesure, un composé chimique de l'échantillon à analyser;

   le procédé comprenant en outre une étape consistant à déterminer (1250) une valeur de temps de rétention et/ou une valeur de temps de diffusion relative au composé chimique associé audit au moins un signal optique de mesure.

## Patentansprüche

1. Gas-Phasen-Analysesystem (1), umfassend ein Injektionssystem (12), das konfiguriert ist, um eine zu analysierende Probe zu injizieren, die mindestens eine chemische Verbindung umfasst, eine Einheit (14) zum Einbringen eines Trägergasstroms, eine Transportsäule (16), und eine Detektionsvorrichtung (18), wobei die mindestens eine chemische Verbindung durch das Trägergas in der Transportkolonne bis zur Detektionsvorrichtung (18) angetrieben wird, wobei die Detektionsvorrichtung (18) ein optischer Detektor ist, der mindestens ein Mach-Zehnder Interferometer (185) umfasst, das von einer optischen Quelle (183) versorgt wird, und in einer Mikrofluid-Struktur (181; 182) integriert ist, wobei das Interferometer (185) einen sensiblen Arm (185-3) umfasst, welcher der mindestens einen chemischen Verbindung ausgesetzt ist, und einen undurchlässigen Referenzarm (185-2) für die mindestens eine chemische Verbindung, wobei das mindestens eine Interferometer (185) angepasst ist, um optisch den Durchfluss der mindestens einen chemischen Verbindung durch den sensiblen Arm (185-3) hindurch zu detektieren, **dadurch gekennzeichnet, dass** die Mikrofluid-Struktur einen Primär-Mikrofluidkanal (181) und/oder mindestens einen Sekundär-Mikrofluidkanal (182) umfasst, der im Bereich des Kanalendes (182-4) versiegelt ist, wobei die mindestens eine chemische Verbindung durch Konvektion durch den Primärkanal (181) hindurch, und/oder durch Diffusion durch den versiegelten Sekundärkanal (182), hindurch transportiert wird, wobei das mindestens eine Interferometer (185) auf dem Primärkanal (181) und/oder dem versiegelten Sekundärkanal (182) positioniert ist, wobei die Detektionsvorrichtung (18) angeordnet ist, um
die Retentionszeit und/oder den Diffusionskoeffizienten der mindestens einen chemischen Verbindung am Ausgang der Kolonne (16) ab der optischen Detektion des Durchflusses der mindestens einen chemischen Verbindung durch das Interferometer (185) hindurch zu bestimmen.

2. Analysesystem (1) nach Anspruch 1, wobei das mindestens eine Mach-Zehnder Interferometer (185) eine Beschichtung auf dem sensiblen Arm (185-3) umfasst, wobei die Beschichtung angepasst ist, um vorzugsweise die mindestens eine chemische Verbindung zu absorbieren.

3. Analysesystem (1) nach einem der vorstehenden Ansprüche, wobei jeder versiegelte Sekundär-Mikrofluidkanal (182) eine verschiedene Kanallänge L aufweist, die in der Bewegungsrichtung der mindestens einen chemischen Verbindung definiert ist.

4. Analysesystem (1) nach einem der vorstehenden Ansprüche, wobei der mindestens eine versiegelte Sekundär-Mikrofluidkanal (182) mindestens ein physisches Hindernis (182-6 oder 182-8) umfasst, das lokal im Kanal (182) angeordnet ist, wobei das Hindernis (182-6 oder 182-8) angepasst ist, um jedes konvektive Phänomen am Eingang des Kanals (182) zu minimieren und/oder um das Diffusionsphänomen der zu detektierenden chemischen Verbindung zu verzögern.

5. Analysesystem (1) nach einem der vorstehenden Ansprüche, wobei die Mikrofluidstruktur weiter mindestens einen offenen Sekundär-Mikrofluidkanal (182) im Bereich des Kanalendes (182-4) umfasst, wobei die mindestens eine chemische Verbindung durch Konvektion durch den offenen Sekundär-Mikrofluidkanal (182) hindurch transportiert wird.

6. Analysesystem (1) nach einem der vorstehenden Ansprüche, wobei der mindestens eine offene und/oder versiegelte Sekundär-Mikrofluidkanal (182) eine Beschichtung umfasst, die eine physisch-chemische Substanz an der Wand des Kanals (182) umfasst.

7. Analyseverfahren einer Probe, die mindestens eine chemische Verbindung umfasst, wobei das Verfahren mindestens die folgenden Schritte umfasst:

   - Injizieren (1210) der zu analysierenden Probe in das Gas-Phasen-Analysesystem (1) nach einem der vorstehenden Ansprüche 1 bis 6;
   - Erfassen (1230) mindestens eines optischen Messsignals, das durch mindestens ein Mach-Zehnder Interferometer (185) des Gas-Phasen-Analysesystems (1) detektiert wird;
   - Zuordnen (1290) zu dem mindestens einen optischen Messsignal, einer chemischen Verbindung der zu analysierenden Probe;

   wobei das Verfahren weiter einen Schritt umfasst, der darin besteht, einen Wert für die Retentionszeit und/oder einen Wert für die Diffusionszeit in Bezug zur chemischen Verbindung zu bestimmen (1250), die dem mindestens einen optischen Messsignal zugeordnet ist.

## Claims

1. Gas-phase analytical system (1) comprising an injection unit (12) configured to inject a sample to be analyzed comprising at least one chemical compound, a unit (14) for introducing a stream of carrier gas, a transport column (16), and a detection device (18), said at least one chemical compound being entrained by the carrier gas into the transport column up to the detection device (18), said detection device (18) being an optical detector comprising at least one Mach-Zehnder interferometric sensor (185) supplied by an optical source (183) and integrated into a microfluidic structure (181; 182), said sensor (185) comprising a sensing arm (185-3) exposed to said at least one chemical compound and a reference arm (185-2) impermeable to said at least one chemical compound, said at least one sensor (185) being designed to optically detect the passage of said at least one chemical compound through said sensing arm (185-3), **characterized in that** said microfluidic structure comprises a primary microfluidic channel (181) and/or at least one secondary microfluidic channel (182) sealed at the channel end (182-4), said at least one chemical compound being transported by convection through the primary channel (181) and/or by diffusion through the sealed secondary channel (182), said at least one sensor (185) being positioned on said primary channel (181) and/or said sealed secondary channel (182), said detection device (18) being arranged to determine the retention time and/or the diffusion coefficient of said at least one chemical compound at the outlet of the column (16) from the optical detection of the passage of said at least one chemical compound through said sensor (185).

2. Analytical system (1) according to claim 1, wherein said at least one Mach-Zehnder interferometric sensor (185) comprises a coating on said sensing arm (185-3), said coating being designed to preferably adsorb said at least one chemical compound.

3. Analytical system (1) according to one of the preceding claims, wherein each sealed secondary microfluidic channel (182) has a distinct channel length L defined in the direction of displacement of said at least one chemical compound.

4. Analytical system (1) according to one of the preceding claims, wherein said at least one sealed secondary microfluidic channel (182) comprises at least one physical obstacle (182-6 or 182-8) disposed locally in said channel (182), said obstacle (182-6 or 182-8) being designed to minimize any convective phenomenon at the inlet of said channel (182) and/or to slow down the diffusion phenomenon of said chemical compound to be detected.

5. Analytical system (1) according to one of the preceding claims, wherein the microfluidic structure further comprises at least one secondary microfluidic channel (182) open at the channel end (182-4), said at least one chemical compound being transported by convection through the open secondary microfluidic channel (182).

6. Analytical system (1) according to one of the preceding claims, wherein said at least one open and/or sealed secondary microfluidic channel (182) comprises a coating comprising a physicochemical substance on the wall of the channel (182).

7. Method for analyzing a sample comprising at least one chemical compound, the method comprising at least the following steps:

- Injecting (1210) the sample to be analyzed into the gas-phase analytical system (1) according to one of the preceding claims 1 to 6;
- Acquiring (1230) at least one optical measurement signal detected by at least one Mach-Zehnder interferometric sensor (185) of said gas-phase analytical system (1);
- Associating (1290) to said at least one optical measurement signal, a chemical compound of the sample to be analyzed;

the method further comprising a step consisting of determining (1250) a retention time value and/or a diffusion time value relative to the chemical compound associated to said at least one optical measurement signal.

[Fig.1]

[Fig.2]

[Fig.3]

[Fig.4]

[Fig.5]

[Fig.6]

[Fig.7]

[Fig.8]

**185**

185-5

185-2

185-3

185-6

150μm

[Fig.9]

[Fig.10]

$D = 0.1 \, cm^2.s^{-1}$

(a)

$\tau \, [s]$

$L \, [mm]$

$D_1 = 0.089 \, cm^2.s^{-1}; \; D_2 = 0.176 \, cm^2.s^{-1}$

(b)

$\delta\tau \, [s]$

x=4.96
y=0.228

$L \, [mm]$

[Fig.11]

[Fig.12]

| | |
|---|---|
| Injecter l'échantillon à analyser dans le système analytique | 1210 |

↓

| | |
|---|---|
| Acquérir chaque signal de mesure détecté provenant du ou des capteurs | 1230 |

↓

| | |
|---|---|
| Pour chaque signal, déterminer la valeur de temps de rétention et/ou la valeur de temps de diffusion du composé chimique associé | 1250 |

↓

| | |
|---|---|
| Pour chaque signal, déterminer la valeur de score relative au composé chimique de l'échantillon et au capteur associé | 1270 |

↓

| | |
|---|---|
| Pour chaque signal, déterminer le composé chimique de l'échantillon associé | 1290 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KEE SCHOLTEN et al.** A Portable Micro-Gas Chromatography with Integrated Photonic Crystal Slab Sensors on Chip. *Lab Chip*, 2014, vol. 14, 3873
- **PRIYANKA BISWAS et al.** *Biosensors*, 2021, vol. 11, 326
- **JING LIU et al.** Fabry-Pérot Cavity Sensors for Multipoint On-Column Micro Gas Chromatography Detection. *Analytical Chemistry*, 2010, vol. 82 (11), 4370-4375
- **INGENHOFF J et al.** Spectral interferometric sensors for gases and liquids using integrated optical devices. *CHEMICAL, BIOCHEMICAL, AND ENVIRONMENTAL FIBER SENSORS IV*, 08 September 1992, vol. 1796
- A gas sensor based on an integrated optical Mach-Zehnder interferometer. **FABRICIUS N et al.** SENSORS AND ACTUATORS B: CHEMICAL. ELSEVIER BV, 01 March 1992, vol. 7, 672-676